# EUROPEAN PATENT SPECIFICATION

(11) **EP 4 468 853 B1**
(45) Date of publication and mention of the grant of the patent: **23.07.2025**
(21) Application number: 23701176.2
(22) Date of filing: 23.01.2023
(51) Int. Cl.: A01G 7/00, A01G 3/00, A01G 22/00, G01N 21/84, G06V 20/60

(54) **METHOD AND SYSTEM FOR INSTRUCTING A USER FOR POST-HARVEST TRIMMING A BUD**
VERFAHREN UND SYSTEM ZUR ANWEISUNG EINES BENUTZERS ZUM BESCHNEIDEN EINER KNOSPE NACH DER ERNTE
PROCÉDÉ ET SYSTÈME PERMETTANT DE GUIDER UN UTILISATEUR POUR LA TAILLE POST-RÉCOLTE D'UN BOURGEON

(30) Priority: 25.01.2022 US 202263302685 P; 03.02.2022 EP 22154885
(43) Date of publication of application: 04.12.2024
(73) Proprietor: Signify Holding B.V., 5656 AE Eindhoven (NL)
(72) Inventor: PATEL, Manush, Pragneshbhai, 5656 AE Eindhoven (NL); GOPAL SAMY, Mathan, Kumar, 5656 AE Eindhoven (NL); DEIXLER, Peter, 5656 AE Eindhoven (NL); KOH, Jaehan, 5656 AE Eindhoven (NL)
(74) Representative: Verweij, Petronella Daniëlle
(86) International application number: PCT/EP2023/051546
(87) International publication number: WO 2023/144082

(56) References cited:
- EP-A1- 2 752 807
- WO-A1-2018/042445
- WO-A1-2018/075674
- WO-A1-2022/002610

## Description

### FIELD OF THE INVENTION

This disclosure relates to a method and system for instructing a user for post-harvest trimming a bud, in particular to such a method and system in which an image is captured of a bud while it is being illuminated with polarized light and an instruction is provided to a user based on the captured image.

### BACKGROUND

Cannabis is one of the highest value crops in the world. Every plant and flower matters most to farmers as they struggle to achieve profitability amidst raising operational costs and fluctuating market price for cannabis. At the end of a cultivation cycle, cannabis flowers are harvested, checked for quality and trimmed according to certain specifications depending on end-use market. For medicinal usage, it is very critical that trimming process retains trichome-rich areas, removes unnecessary areas (such as fan leaves) and eliminate any harmful or infected parts of the flower. For recreational usage, manicuring (as it is popularly called among growers) is key to make grower's end product more appealing to their customers.

At present, as also described in US 2020/0108398 A1, automated trimmer devices are not as accurate or as smart as a trained human trimmer. According to multiple surveys of cannabis growers, high quality trimming is presently only achieved through manual trimming. Automated machines are reasonably good at removing fan leaves but struggle in removing smaller leaves, infected parts of flowers and stems. Alternatively, an expert trimmer not only achieves highest possible flower quality but also caters, unlike the trimming machines, to multi-dimensional ill-defined requirements such as curation, look & feel and uniformity across a batch of flowers. Due to high stakes in erroneous trimming (mistakes may lead to loss of trichomes and failure to meet regulatory compliances), manual trimming by human experts is the common practice today. This presents challenge to this growing industry where experienced trimmers are scarce and expensive.

Trimming harvested flowers is an essential step in the cannabis cultivation process. Depending on final produce, growers remove unnecessary materials from the leaves such as fan leaves, sugar leaves etc. Trimming can be performed right after harvest (called wet trimming) or after drying flowers (called dry trimming). The trimming process requires sharp vision, good judgement, and lots of practice.

One example of flower part requiring trimming is the sugar leaf. The desired sugar leaves with high tetrahydrocannabinol (THC) are part of cola and are slightly smaller than the unnecessary fan leaves which do not contain THC. Depending on end use, sugar leaves and fan leaves are trimmed partially or fully to give the final bud the required uniformity (in shape, size, aesthetics, and chemical contents). However, if during trimming these leave types are not identified properly, the end product will have unexpected uniformity and result in loss of product value. For example, for medicinal use, incorrect trimming may result in undesired level of THC or CBD per unit weight (as the different leaf types have varied amount of trichomes). This may cause the rejection at the final chemical test. Next to the fan leaves there are other undesired parts that may need to be trimmed including parts of flower which have a disease, or have no cannabinoids left due to drying out. Determining the right order of trimming these leaves can be tricky for non-experts and sometimes if not trimmed properly can cause loss of yield through flowers.

Hence, in light of the above, there is a need in the art for technology that improves and/or eases post-harvest trimming.

WO 2022/002610 A1 discloses a method for determining the growth stage of a plant. The method comprises illuminating the plant with illumination light, the illumination light causes response light from the plant. The method further comprises detecting the response light from the plant and based on the detected response light, determining the growth stage of the plant. In this method, (i) illuminating the plant comprises illuminating with at least partially polarized illumination light, and/or (ii) detecting the response light comprises polarization filtering the response light. The plant may be a Cannabis plant and the growth stage may refer to a growth stage in the ripening process of a Cannabis flower.

### SUMMARY

To that end a method is disclosed for instructing a user for post-harvest trimming a bud of a plant, preferably a cannabis plant. The method comprises presenting a side of the harvested bud to an imaging system. The method also comprise illuminating, with a light source system, a harvested bud with illumination light. The illumination light causes response light from the harvested bud. The method also comprises receiving, with an imaging system, the response light for forming an image of the harvested bud. In this method, (i) illuminating the bud comprises illuminating with at least partially polarized illumination light and/or (ii) detecting the response light comprises polarization filtering the response light. The method also comprises determining, with an image processing system, based on the formed image, a part of the bud that is to be trimmed off. Further, the method comprises providing, with a user interface, based on the image processing system determining that said part of the bud is to be trimmed off, an instruction to a user to trim off said part, and providing, with the user interface, an instruction to the user to present a different side of the harvested bud to the imaging system.

The method enables untrained human trimmers to perform high quality trimming. It will help to reduce trimming time, reduce wastage and improve in quality of end product, especially when shape and chemical contents are of high importance to the farmer. Due to the polarized light, important parts of the bud, for example the parts that contain relatively many trichomes, can be easily identified by the image processing system. Trichomes are microscopic structures concentrated in flowers where cannabinoids and other chemicals, such as THC, are developed in a cannabis plant. At the time of harvest, trichomes are usually cloudy and/or amber while pistils turn bright brown. The cannabis flower's reflectivity of polarized light varies based on the flower part (flower, leaves, pistils, stem etc.) and trichome properties (density, size, maturity, coloration etc.). Parts of the bud with different density of trichomes will react visibly differently to the polarized light. Hence, the polarized light enables the image processing system to accurately determine which parts of the bud contain a high density of trichomes and thus which parts should be maintained and which parts should be trimmed.

The polarized light may be focused onto the bud.

Degree of polarization (DOP) may be understood to indicate which portion of an electromagnetic wave is polarized. For example, a perfectly polarized wave may have a DOP of 100%, whereas an unpolarized wave may have a DOP of 0%. A wave which is partially polarized, and therefore can be represented by a superposition of a polarized and unpolarized component, will have a DOP somewhere in between 0 and 100%. DOP may be the ratio between the power that is carried by the polarized component of the wave and the power that is carried by the wave as a whole.

As used herein, light may be referred to as polarized light if it for example has a degree of polarization (DOP) of at least 5% or of at least 10% or of at least 20% or of at least 30% or of at least 40% or of at least 50% or of at least 60% or of at least 70% or of at least 80% or of at least 90%. If light is not at least partially polarized, it may be referred to as unpolarized light.

Light may be understood to be polarized if it is polarized in more than one, e.g. two or three, directions. In such case, the electromagnetic wave may be represented by a superposition of several polarized components and optionally an unpolarized component. Such at least partially polarized illumination light for example has a ratio between the power of a component in one direction and the power that is carried by the wave as a whole of at least 5% or of at least 10% or of at least 20% or of at least 30% or of at least 40% or of at least 50% or of at least 60% or of at least 70% or of at least 80% or of at least 90%.

A direction of the light's polarization may be defined as the direction parallel to the electric field of the electromagnetic wave describing the light. Furthermore, it should be appreciated that a particular direction of polarization may be understood to comprise a range of directions, e.g. all directions between -2 degrees and +2 degrees from said particular direction. To illustrate, if the polarization direction is said to be 20 degrees with respect to a reference direction, then the 20 degrees polarization may comprise all components of the light having a polarization direction between 18 and 22 degrees.

The imaging system may comprise a camera, e.g. an RGB camera, that is configured to form two-dimensional images based on light that is incident on the camera. Additionally or alternatively, the imaging system comprises a photometric sensor that is configured to measure reflection and/or refraction and/or absorption of polarized light on a surface of the harvested bud. Each surface of the bud may have characteristic reflection properties based on which the to-be-trimmed-off part of the bud can be determined.

The light source system preferably comprises one or more polarization filters. Additionally or alternatively, the light source system may be configured to illuminate the bud with non-polarized light as well. In such case, preferably, the imaging system is configured to capture as well an image of the bud while it is being with the unpolarized light. Based on the images captured with polarized and unpolarized light, important parts of the bud, e.g. parts containing relatively many trichomes, can be even more accurately determined. In an example, the important parts of the bud are identified based on a difference between the image captured while the bud is being illuminated with polarized light and the image captured while the bud is being illuminated with unpolarized light.

It should be appreciated that the methods for instructing a user as described herein may be computer implemented methods.

The image processing system may be also be configured to determine, based on the captured image, different actions that are performed during trimming including removal of parts with mold, removal of dry parts, breaking down the cola into an optimum number of buds to maximize the financial value realized from each cola.

In an embodiment, the plant is a Cannabis plant, e.g. a Cannabis Sativa plant or a Cannabis Sativa L. plant or Incica plant. In this embodiment, the bud is preferably a bud of a female plant because the female flowers are typically consumed, whereas the male flowers are not. The female flowers of a Cannabis plant have so-called specialized metabolites, such as Cannabinoid metabolites, that are known to cause psychoactive and/or medicinal effects.

In an embodiment, the user interface comprises a head-mounted display. In such embodiment, the step of the user interface providing the instruction to the user to trim off said part may comprise displaying the instruction to trim off said part on the head-mounted display.

The head-mounted display enables the user to have his hands free to hold and trim the bud. Preferably, the head-mounted display is transparent so that the user can see through the head mounted display. This enables the head-mounted display to augment the user's view with the provided instruction. The instruction may be provided as an overlay onto the physical bud, as is known in Augmented Reality (AR) applications. The head- mounted display may be AR glasses.

In an embodiment, the step of illuminating the harvested bud comprises illuminating, with the light source system, the harvested bud with first illumination light being polarized light having a first polarization. The first illumination light causes first response light from the harvested bud. The method also comprises receiving, with the imaging system, the first response light for forming a first image of the harvested bud. The method also comprises illuminating, with the light source system, the harvested bud with second illumination light being polarized light having a second polarization that is different from the first polarization. The second illumination light causes second response light from the harvested bud. The method further comprises receiving, with the imaging system, the second response light for forming a second image of the harvested bud.

Hence, in this embodiment, the bud is illuminated with light having different polarizations.

In such embodiment, the image processing system preferably determines the part of the bud that is to be trimmed off based on the first and on the second image. The parts of the bud containing trichomes respond differently to polarized light than parts not containing trichomes. However, this effect may not be as strong for any arbitrary direction of polarization. Hence, by varying the polarization direction the probability that important parts of the bud are appropriately identified is increased.

In an embodiment, the step of determining the part of the bud that is to be trimmed off is based on a model that is obtained by a machine learning method, the machine learning method comprising building said model based on training data, the training data comprising a plurality of images of respective reference buds and the training data indicating for each image which part of the imaged bud should be trimmed off.

Preferably, the indications in the training data that indicate for each image which part of the reference bud is to be trimmed off have been added to the training data by a human expert.

Also, preferably, each image (also referred to as "reference image") out of the plurality of images in the training data has been obtained by
- illuminating, with a light source system, the reference harvested bud in question with illumination light, the illumination light causing response light from the reference harvested bud in question, and
- receiving, with an imaging system, the response light and forming the reference image in question of the harvested bud in question, wherein illuminating the reference bud comprises illuminating with at least partially polarized illumination light and/or wherein receiving the response light comprises polarization filtering the response light. In this manner, the model will specifically be trained to determine to-be-trimmed-off parts of a bud based on an image obtained using polarized light and/or using polarization filters, which is, of course, convenient, because the image that is input to the model is also obtained using polarized light and/or polarization filters. Hence, the model is trained to recognize characteristics of the bud, e.g. parts having high/low density of trichomes, that are revealed by using polarized light and/or polarization filters.

According, to the invention, the method comprises providing, with the user interface, an instruction to the user to present a different side of the harvested bud to the imaging system, for example by providing an instruction to the user to rotate the bud.

In such manner, the user may be guided to rotate the bud. During the rotation polarized and non-polarized light may be focused onto the bud in order to capture images and light reflection response indicative of THC content.

In an embodiment, the method comprising providing, with the user interface, an instruction to the user to present a plurality of sides of the harvested bud to the imaging system so that the imaging system can capture a plurality of images of the harvested bud from the plurality of sides.

The bud, as it is harvested, can be easily rotated, especially if a user is holding the bud in his or her hands.

In an embodiment, the step of receiving response light and forming an image of the harvested bud comprises receiving, from a plurality of different angles relative to the harvested bud, response light and forming a plurality of respective images of the harvested bud from the response light received from the plurality of respective different angle.. This method allows to accurately determine which parts are to be trimmed from the entire bud.

In an embodiment, the method comprises determining, based on the plurality of images of the harvested bud from the plurality of sides and/or based on the plurality of respective images of the harvested bud from the plurality of respective different angles, a virtual three-dimensional image of the harvested bud.

This embodiment allows to even more accurately determine which parts are to be trimmed.

Preferably, the virtual three-dimensional image is determined before the trimming procedure commences.

In an embodiment, the method comprises the image processing system determining one or more image regions in the formed image and/or determining one or more virtual regions in the virtual three-dimensional image, which one or more image regions and/or one or more virtual regions respectively represent one or more parts of the bud , said one or more parts comprising the to-be-trimmed off part.

This embodiment allows to accurately virtually segment the bud, which allows for separate analysis of these segments and more accurate determination of which parts are to be trimmed of the bud.

In an embodiment, the one or more image regions and/or one or more virtual regions are determined based on the one or more image regions and/or one or more virtual regions comprising pixels representing trichomes on the bud.

This embodiment provides an efficient manner of determining the image regions and/or virtual regions that represent part of the bud containing relatively many trichomes. As indicated above, the polarized light enables to accurately determine parts of the bud containing trichomes.

In an embodiment, the method comprises the image processing system determining, for each image region of the one or more image regions and/or for each virtual region of the one or more virtual regions, a score indicating a degree to which the bud's part as represented by image region in question and/or by the virtual region in question is desired in the bud.

This embodiment enables the image processing system to determine which parts of the bud are to be trimmed in a convenient manner.

In an example, each score for each part may be compared with some threshold value Then, the image processing system may determine for each part, based on such comparison, whether it is to be kept or trimmed off. Especially parts of the bud representing low values. e.g. parts having only few trichomes, may be trimmed off.

The score for example indicates a predicted harvest value of each detected part.

In an embodiment, the method comprises the user trimming off said part based on the instruction provided by the user interface.

According to the invention, a system for instructing a user for post-harvest trimming a bud of a plant, the system comprising
a light source system for illuminating a harvested bud with illumination light, the illumination light causing response light form the harvested bud, and
an imaging system for receiving the response light for forming an image of the harvested bud, wherein (i) the light source system is configured to illuminate the bud with at least partially polarized illumination light and/or wherein (ii) the imaging system comprises a light polarization filter for polarization filtering the response light, preferably before the response light is incident on an imaging plane of the imaging system, and
an image processing system for determining, based on the captured image, a part of the bud that is to be trimmed off, and
a user interface for providing, based on the image processing system determining that said part of the bud is to be trimmed off, an instruction to a user to trim off said part, and to present a different side of the harvested bud to the imaging system.

Any of the light source system, imaging system, image processing system and user interface may be configured as described herein for the corresponding method.

One aspect of this disclosure relates to a computer program comprising instructions to cause any system described herein to perform any of the methods described herein. Of course, such methods are preferably computer-implemented methods, in such case.

One aspect of this disclosure relates to a computer comprising a
a computer readable storage medium having computer readable program code embodied therewith, and
a processor, preferably a microprocessor, coupled to the computer readable storage medium, wherein responsive to executing the computer readable program code, the processor is configured to cause any of the system described herein to perform any of the method steps described herein.

One aspect of this disclosure relates to a computer program or suite of computer programs comprising at least one software code portion or a computer program product storing at least one software code portion, the software code portion, when run on a computer system, being configured for causing any of the system described herein to perform any of the method steps described herein.

One aspect of this disclosure relates to a non-transitory computer-readable storage medium storing at least one software code portion, the software code portion, when executed or processed by a computer, is configured to cause any of the system described herein to perform any of the method steps described herein.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Moreover, a computer program for carrying out the method described herein, as well as a non-transitory computer readable storage-medium storing the computer program are provided. A computer program may, for example, be downloaded (updated) to the existing systems (e.g. to the existing image processing system) or be stored upon manufacturing of these systems.

Elements and aspects discussed for or in relation with a particular embodiment may be suitably combined with elements and aspects of other embodiments, if comprised in the scope of the invention limited by the appended claims.

Embodiments of the present invention will be further illustrated with reference to the attached drawings, which schematically will show embodiments according to the invention. It will be understood that the present invention is limited by the appended claims.

### BRIEF DESCRIPTION OF THE DRAWINGS

Aspects of the invention will be explained in greater detail by reference to exemplary embodiments shown in the drawings, in which:
FIG. 1 is a flow chart illustrating a method according to an embodiment for instructing a user for post-harvest trimming a bud of a plant
FIG. 2 schematically illustrates an embodiment of the system 1 for instructing a user 20 for post-harvest trimming a bud 22 of a plant;
FIGS. 3A-3C illustrate different embodiment of the light source system and imaging system;
FIGS. 4A-4D illustrates different embodiment of the light source system and imaging system;
FIG. 5 illustrates aspects of the imaging system and the image processing system;
FIG. 6 schematically illustrates how machine learning techniques may be utilized;
FIG. 7 schematically illustrates a user interface according to an embodiment;
FIG. 8 illustrates a data processing system according to an embodiment.

### DETAILED DESCRIPTION OF THE DRAWINGS

In the figures, identical reference number indicate identical or similar elements.

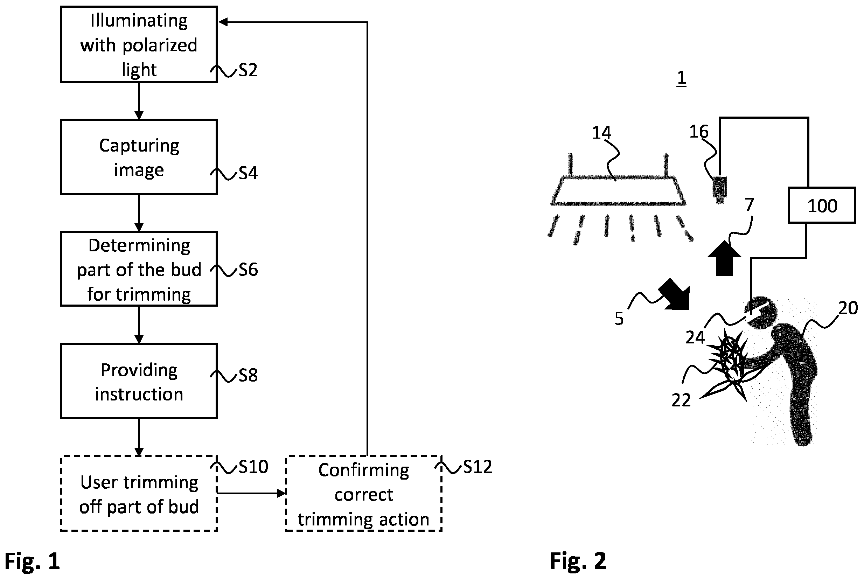

Figure 1 is a flow chart illustrating a method according to an embodiment for instructing a user for post-harvest trimming a bud of a plant, such as a harvested bud of a cannabis plant. As explained above, such method is advantageous in that it enables untrained human trimmers to perform high quality trimming of the bud. The depicted embodiment comprises a step 2 of illuminating a harvested bud with illumination light. This step may be performed by a light source system as described herein. The illumination light causes response light from the harvested bud.

As used herein, the response light may comprise illumination light that has been reflected and/or transmitted by the bud. Additionally or alternatively, the response light may comprise photo-luminescent light, such as fluorescent light. This may for example be the case if the illumination light photo-excites the bud or parts thereof. Photoluminescence may be understood to be luminescence that is caused by the absorption of photons.

The method of figure 1 further comprises a step 4 of receiving the response light for forming an image of the harvested bud. This step may be performed by an imaging system as described herein. Receiving the response light may comprise receiving the response light at a light sensitive (hardware) imaging plane of the imaging system. In the method, illuminating the bud comprises illuminating with at least partially polarized illumination light. Additionally or alternatively, detecting the response light comprises polarization filtering the response light. The trichomes for example on a bud of a cannabis plant reflect polarized light differently depending on the orientation of the polarization. Hence, if - upon varying the polarization orientation of the illumination light - the irradiance incident on for example an imaging plane of the imagin system varies as well, then this may indicate that trichomes are present in the illuminated area of the bud. This allows to identify ares on the bud having high concentrations of trichomes, for example. Likewise, the trichomes, when illuminated with non-polarized light, may reflect (at least partically) polarized light. Such polarized response light may be detected for example by varying the orientation of polarization that passes through a polarization filter. If the radiant power of the filtered response light varies when varying the filter orientation, then apparently the response light coming from the bud has a certain degree of polarization, which may be caused by trichomes on the bud. Through this mechanism, trichomes on the bud may be identified and the amount of identified thrichomes may be taken into account in the determination which part of the bud is to be trimmed off. Typically, part containing high concentrations of trichomes are preferably not trimmed off.

The imaging system may be understood to form an image of the bud in the sense that it determines image data based on response light incident on the imaging system. The image data then indicates for each area out of a plurality of areas on the bud, an irradiance of the response light as incident on an imaging plane of the imaging system originating from the area (on the bud) in question. Thus, image data may be understood to indicate respective irradiance values for respective areas on the bud. In this sense, the image data may thus be understood to be spatially resolved. This is of course convenient, because the images formed based on the response light are used to determine which part of the bud is to be trimmed off.

The method further comprises a step 6 of determining, based on the formed image, a part of the bud that is to be trimmed off. This step may be performed by an image processing system. This step may comprise identifying parts of a bud that have high harvest value as they likely contain high concentrations of CBD, THC and terpenes. The target requirements of the end produce may be taken into account (e.g. a customer has ordered buds within a certain THC range). In this step, data from an RGB imager and light sensor (both may be part of the imaging system) may be used. The light sensor data for example measures the intensity of the light reflected by the specific part of the bud that is currently under inspection. Optionally, a deep learning algorithm will have been trained to identify plant parts that have less value and needs trimming and/or are not aestetically pleasing to the end user. The inventors recognize that parts with different density of trichomes (small hair like parts with CBD and THC) will react visibly differently to the focused polarized light; this can be detected by a trained deep neural net and highlighted to the trimmer via AR display.

The input for step 6 may thus be intensity inputs from both light receiver and images and the output of this algorithm may be instructions in the form of a masked image with labels showing particular parts of the flower that require trimming/clipping and the approximate value associated with the part.

The system may first instruct the trimmer to manually rotate flower bud so that clear 3-D representation of the bud can be generated. This 3D image may then be used for a first order analysis of the trichomes and first order estimate of the value of the bud. Using a first neural network algorithm, different classes of flower parts will be identified along with its healthiness, quality and availability in trichomes.

The first neural network may be used in combination with a simpler second neural network that takes in the light intensity values recorded from each part of the bud. The inventors recognize that different density of trichomes will behave differently under certain angled polarized light. Hence, the second neural network may utilizes the measured amounts of polarized light reflected from the bud to the light sensor. This may be fed to a regression algorithm. Alternatively, a neural network may be used to generate a mapping equation comprising several variables that maps the light reflection with the amount of cannabinoids and diseased parts of the bud.

The output of the algorithms may be a list of actions such as which leaves to trim first, what parts to remove and where exactly to trim at what particular angle. The system may also look at the amount of cannabinoids at the each part and determine the value of that particular part using forecasting mechanism.

The method further comprises a step 8 of providing, based on the image processing system determining that said part of the bud is to be trimmed off, an instruction to a user to trim off said part. This step may be performed by a user interface.

Preferably, the method also comprises the user trimming off said part of the bud based on the provided instruction as depicted in step 10.

The method may further comprise a step 12 of confirming that the user has trimmed off the part of the bud in accordance with the provided instruction. Such step may be performed by a task verification system. Such step may be performed by monitoring the bud. A verification algorithm may be used that qualitatively assesses trimmer's action against 3D flower model and recommended actions and provide feedback to the user. This algorithm may be based on an iterative process of template matching between a given input image captured during/after action (e.g. pruning) and reference image captured by a monitoring system from which recommendations were generated previously. A generic template matching algorithm with one or more of the following similarity metrics may be used to complete matching process: (a) cross-correlation coefficient, (b) sum of absolute differences, (c) geometric distances, and (d) mutual information scores. Step S12 ensures that the actions are carried out completely as recommended.

Preferably, as indicated by the arrow from step 12 to step 2, the method is performed repeatedly in order to determine multiple parts of the bud that are to be trimmed off. The method may be performed multiple times in parallel and/or sequentially. Reperforming the method for instructing the user again after the user has trimmed off an appropriate part of the bud may be beneficial, because due to that part having been trimmed off, other parts of the bud have become visible, which can then be analysed in order to determine whether some parts need to be trimmed off as well.

Thus, the method provides a way of guiding the worker collaboratively so that the worker can trim the flower with real time feedback. The method will also help a trimmer understand the final value of the trimmed bud to easily determine the total prunes required. It may also provide in real time positive feedback about a job well done.

If the method is performed a plurality of times in parallel such that multiple parts that are to be trimmed, are identified, then the method may comprise determining an order of trimming the identified to-be-trimmed parts of the bud. It may for example be more convenient to first trim a first portion of the larger fan leaves at the bottom of the bud and thereafter trim smaller intertwined sugar leaves in the bud. Determining the order may be based on a current body posture, e.g. a current hand posture and/or hand location, of the user.

The system may determine the optimal rotation direction of the bud while trimming; in addition, secondary decisions such as the desired final outcome regarding the size of the final bud, removal of parts with mold can be tuned according to end-user preferences.

Figure 2 schematically illustrates an embodiment of the system 1 for instructing a user 20 for post-harvest trimming a bud 22 of a plant.

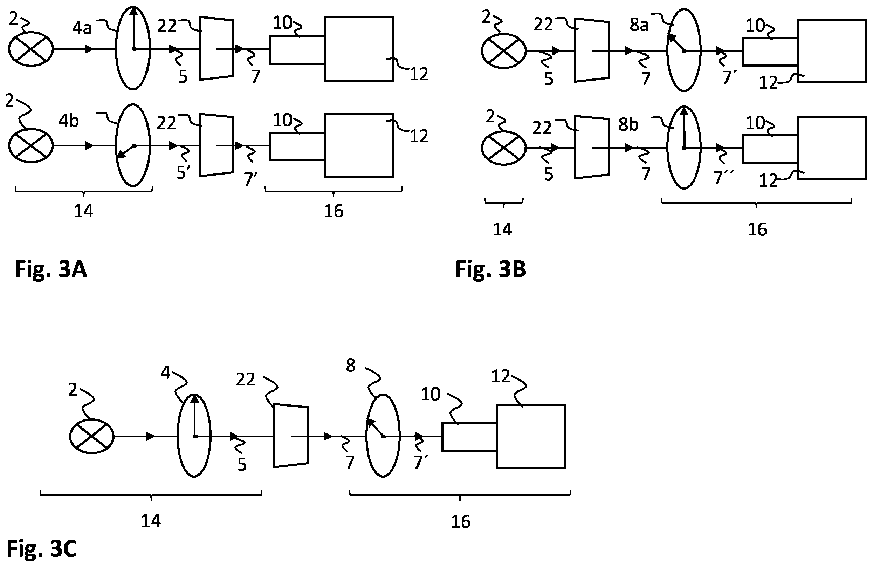

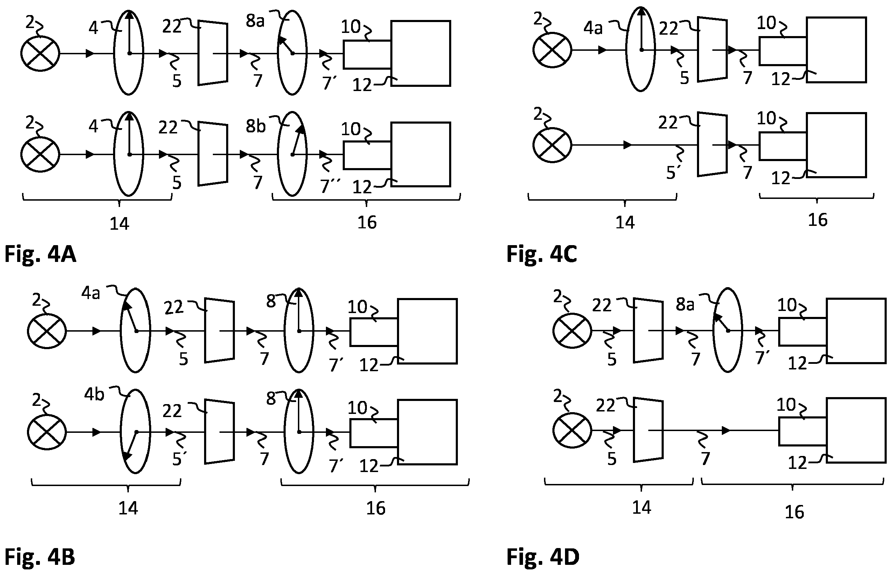

The system 1 comprises a light source system 14, an imaging system 16, an image processing system 100 and a user interface 24. The light source system 14 is configured to illuminate a harvested bud 22 with illumination light 5. The illumination light 5 causes response light 7 from the harvested bud. The response light 7 may be illumination light that has been reflected from the bud 22. As will be described in more detail with reference to figures 3 and 4, the light source system 14 may be configured to illuminate the bud 22 with at least partially polarized illumination light 5, however, this is not strictly required. The imaging system 16 is configured to receive the response light 7 for forming an image of the harvested bud 22. Further, as will also described in more detail with reference to figures 3 and 4, the imaging system 16 may comprise a polarization filter for polarization filtering the response light 5.

The system 1 further comprises an imaging processing system 100 that is configured to determine, based on the image formed by the imaging system, a part of the bud 22 that is to trimmed off.

The system 1 further comprises a user interface 24 for providing, based on the image processing system determining that said part of the bud is to be trimmed off, an instruction to a user to trim off said part. In the depicted example, the user interface 24 is embodied as a head-mounted display which is very convenient as it allows the trimmer to use both hands for trimming the bud. Preferably, the head-mounted display is configured to display in image of the the bud from a viewpoint of the user and to overlay instructions for trimming a part of the bud onto this image of the bud. It should be appreciated that the head-mounted display may also be a semi-transparent dislplay. In such case, it may not be necessary to display an image of the bud on the display. In such case, it may be sufficient to render only the instructions to trim off a part of the bud on the display such that the rendered instructions overlay on the bud as the user sees it. The latter is sometimes referred to in the art as augmented reality.

Preferably, the person holds the bud 22 in his or her hands and preferably a plurality of images are captured by the imaging system from a plurality of different angels relative to the bud. This for example allows to conveniently construct a three-dimensional image of the bud.

Figure 3A (top) schematically shows a light source system 14 and an imaging system 16 according to an embodiment. In the embodiment of figure 3A, the light source system 14 is configured to illuminate the bud 22 with at least partially polarized, e.g. linearly polarized, illumination light 5. In this example, the polarized illumination light 5 is generated by applying a polarization filter 4a to light that is generated by a light source 2 that is configured to generated unpolarized light. The light source 2 and polarization filter 4a together form a light source system 14 that is configured to illuminate the bud 22 with at least partially polarized illumination light 5.

The illumination light 5 causes response light 7 from the bud. The illumination light may be understood to cause the plant to respond by emitting response light. The response light 7 may comprise processed illumination light. Such processing may comprise reflecting and/or absorbing and/or changing polarization of the illumination light.

The response light 7 is incident on an imaging system 16, which in an example comprises a telescope 10 and a camera 12.

Figure 3A (bottom) shows the same system yet at a later time instance. Now, another polarization filter 4b, that has another polarization direction than polarization filter 4a is used. Hence, the illumination light 5' has a different polarization direction than illumination light 5. As a result, assuming that the bud 22 comprises polarization active parts, i.e. parts that respond differently to differently polarized illumination light, the response light 7' differs from response light 7. Response light 7 may be referred to as first response light and response light 7' as second response light. As explained above, based on the first response light 7 and second response light 7', important properties of the bud, such as trichome concentration, can be made visible. Although the figures 3 and 4 schematically show the response light 7 as being transmitted through the bud 22, the response light may also be light that is reflected back from the bud.

Thus, in this system, the polarization direction of the illumination light can be changed. Of course, although figure 3A shows only two different polarization directions for the illumination light, in an embodiment, the polarization direction of the illumination light is rotating continuously, for example over 180 degrees.

Such change of polarization direction of the illumination light may be referred to as dynamic polarized light. Such light can be created by a standard light source with mechanically rotatable polarizer mounted in front of it. Then, the polarization direction of the light sequentially shifts ('rotates') at the pace of the rotating external polarizer disk. A dynamic polarized light can also be created with a MR 16 light source with embedded mechanically rotatable polarizer. Further, dynamic polarized light can be created with a dual-(or more) polarized spot with electrically adjustable polarization. The use of multiple chip-level micro-light sources integrated in a second optics module allows to electrically (with a driver) switch polarization direction at high frequencies. Dynamic polarized illumination light can also for example be generated by controlling a liquid crystal based polarizer in front of light source, using illumination based on switchable laser sources (laser generate polarized light) with different orientation or using pixelated light source with the pixels having different polarization directions.

The system of figure 3A is very suitable to create a 'sparkling effect' which makes the polarization active parts of the plant, e.g. trichomes on a Cannabis flower, highly visible. Such sparkling effect is caused by the polarization active parts responding differently to changing polarized illumination light.

As indicated above, versus a light source that is post-processed towards polarized light, dynamic polarized light can be created using a laser light source (mainly Nd:YAG lasers are linearly polarized, diode lasers are less polarized or even elliptically polarized). The laser source can be attached to an arm or combined in a horticulture lamp to scan the plant from top to bottom in order to have an in-depth canopy measurement of ripening.

It should be appreciated that the imaging system may be understood to form two images of the bud, one based on received first response light 7 and one based on second response light 7'. As used herein, forming image may be understood as determining data indicating, for each of a plurality of positions on the bud, a radiant power originating from the position in question. The data that is determined when forming an image may be referred to as spatially resolved data. It should be appreciated that forming an image does not necessarily comprise rendering an image on a display. In principle, any determination of data based on which an image could be formed, e.g. any spatially resolved data, may be understood as forming an image referred to herein. In order to determine the image data, the imaging system 16 may comprises an imaging plane comprising a plurality of pixels, wherein each pixel receive light from a specific position on the bud. IN this way, the imaging

Figure 3B shows an embodiment, wherein the imaging system 16 is configured to polarization filter the response light in different directions subsequently. Figure 3B (top) shows a system comprising an imaging system comprising a polarization filter for polarization filtering the response light - in this example a polarization filter 8a having a first polarization direction - in order to obtain filtered first response light 7'. Figure 3B (bottom) shows the same system at a later time instance. Now, the polarization filter 8b polarization filters the response light 7 in order to obtain differently polarized response light 7'', which may be referred to as filtered second response light. In this example, a polarization filter 8b is used that has a different polarization direction than filter 8a. Based on the first and second response light, an image of the bud can be formed. This embodiment, also causes the above-mentioned sparkling effect, which is observable by a human and/or an automated system.

In practice, a user may use an inspection filter of which he can change the polarization (manually, motorized or electrical) to enhance the polarization characteristics of the trichomes as described above.

The imaging system 16 may comprise a special camera with dedicated on-chip polarizers. Such an imaging system has several differently oriented polarization filters on respective pixels of an imaging sensor. These filters are formed during the semiconductor process. Such cameras are mainly targeted at industrial inspection applications where the detection of polarization can be used to highlight defects in materials, however, can also be advantageously used in the context of instructing a user for post-harvest trimming a bud of a plant.

Figure 3C shows an embodiment, wherein both the illumination light 5 is at least partially polarized and wherein the response light 7 is polarization filtered in order to obtain polarized response light 7'. The polarization active parts of the bud may rotate the direction of the incident illumination light, whereas the rest of the bud may reflect unpolarized light, even if the illumination light is polarized. In such case, the response light will have a relatively strong component in one polarization direction, which can be made visible using a filter 8 as shown in figure 3C.

Figure 4A shows the system of figure 3C at two respective time instances (top resp. bottom). Herein the filter 8 polarization filters the response light for obtaining differently oriented polarization light at the two time instances. In this example, two different polarization filters 8a and 8b having different polarization directions are used. If the polarization active parts rotate the polarization direction whereas the rest of the bud reflects unpolarized light, with the change of polarization direction in the imaging system 16, the intensity of the response light from the polarization active parts will change, while the intensity of the response light from other parts of the plant will remain substantially the same. Hence, this embodiment allows to easily detect the polarization active parts. Note that in this embodiment, response light 7' may be referred to as first response light and response light 7" may be referred to as second response light.

Figure 4B shows the system of figure 3C at two respective time instances. Herein, the light source 14 illuminates the plant with first illumination light 5 at the first time instance and with second illumination light 5' at the second time instance. The first and second illumination light have different polarization directions. In this example, the imaging system polarization filters the response light 7 at the two time instances in the same way. This embodiment also allows to visualize the polarization active parts of the bud, based on the same principle described with reference to figure 4A.

In an embodiment, the polarization direction of the illumination light at the first time instance is different from the polarization direction of the illumination light at the second time instance and the direction of polarization filtering is different at the first time instance than at the second time instance. Preferably, the relative direction of the illumination light with respect to the direction of polarization filtering, performed by the imaging system 16, at the first time instance is different from this relative direction at the second time instance. For example, if the angle between the direction of polarization of the illumination light and the polarization filter of the imaging system at the first time instance is 10 degrees, then this angle is not 10 degrees, e.g. 50 degrees, at the second time instance.

Figure 4C illustrates an embodiment wherein the light source system 14 is configured to generate first illumination light 5 and then illumination light 5'. In particular, the embodiment illustrates that the light source at a first time instance illuminates the bud 22 with at least partially polarized light 5, referred to as first illumination light, and at a second time instance illuminates the bud 22 with unpolarized light 5', referred to as second illumination light. This embodiment allows to visualize the polarization active parts as well. In a particular embodiment, the light source may continuously switch between unpolarized light and polarized light, for example every second.

Figure 4D illustrates an embodiment wherein the imaging system is configured to polarization filter the response light for obtaining first response light 7' having a first polarization direction, and to subsequently not polarization filter the response light for obtaining second response light 7 that is unpolarized. In a particular embodiment, the imaging system may continuously switch between a state in which it polarization filters the response light and a state in which it does not polarization filter the response light, for example every second.

Preferably, when the method involves detecting first response light at a first time instance and second response light at a second time instance and involves influencing the polarization and/or polarization direction of the illumination light and/or the response light somewhere between the first and second time instance, as shown in figures 1A, 1B, 2A, 2B, 2C, 2D, the first and second response light are detected quickly after each other, for example within 10 minutes, preferably within 1 minute, most preferably within ten seconds. For creating dynamic sparkling effects, and when using solid state based electronic solutions, system can even change between states faster, e.g. with a 10 - 50 Hz frequency as to make effects highly visible. These embodiments may be understood to perform such influencing in order to cause differences between the first and second response light. Based on these differences, the polarization active parts can be identified, made visible. Therefore, it is undesirable that other factors contribute to such differences, such as the formation of additional polarization active parts on the plant. This may for example happen if the second response light is detected one week later than the first response light.

In an embodiment, a combination of polarized and non-polarized light sources are mounted such to provide uniform illumination of the workstations where harvested cannabis flowers are trimmed. In addition, a set of sensors may be employed to continuously monitor both the illuminated surface and trimmer's action. In one embodiment, a first photometric sensor is utilized and a second imaging sensor which detect reflectivity from different parts of flower being trimmed.

The polarized light may utilze a targeted light focusing mechanism to purposefully shine polarized light only on the specific parts of the flower being trimmed, but not the other parts of the cola. This ensures that an improved image quality of the RGB sensor. In addition, the non-polarized light source may be controlled such to maximize the quality of images captured by imaging sensor (e.g. RGB camera) on both the part of the bud illuminated also with polarized light and the part of the bud only illuminated with non-polarized light.

By integrating sensors, luminaire, a control system and decision-making software (see next section), a closed-loop system is realized where real-time feedback from sensory units are used to calibrate the illumination of the bud, resulting in an improved, re trimming performance. Trichomes being as translucent as they are will reflect the polarized light at an angle which can be learnt through regression. As a fallback measure, if the lighting infrastructure is not capable of hosting sensors, an augmented reality (AR) glass and its onboard sensors may provide aforementioned feedback to the lighting system to adjust the non-polarized light. In an alternative embodiment it is also possible to host polarized light source in a head mounted AR glass.

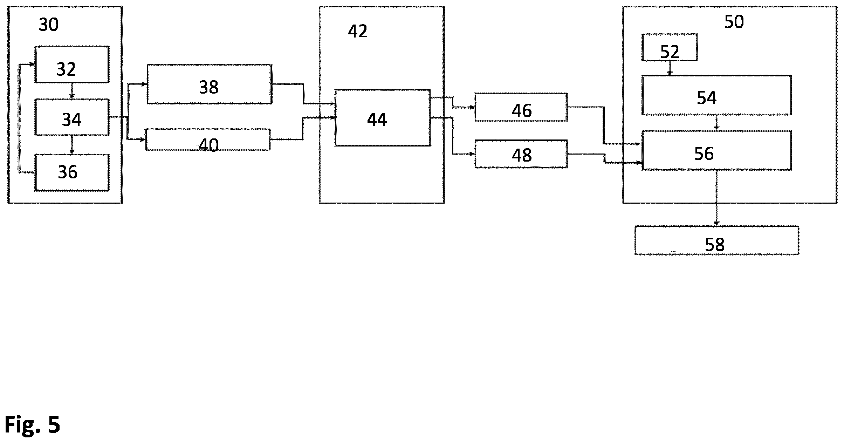

Figure 5 illustrates aspects of the imaging system 16 and the image processing system 100 described herein.

Herein, the three blocks 30, 42 and 50 respectively represent, optionally software, modules of the imaging system 16 and/or image processing system 100 described herein, whereas blocks 38, 40, 46, 48 and 58 represent data as output by these respective modules.

In particular, block 30 represents a monitoring system, block 42 a task recommender system and block 50 an augmentation system.

The monitoring system 30 comprises a light receiving sensor unit 32 and one or more cameras 36, both of which may be understood to be part of the imaging system 16 described herein. The monitoring system further comprises an algorithm unit 34, which may be understood to be part of the image processing system 100 described herein, that is configured to, based on captured images of the bud, output a virtual three-dimensional image 38 of the harvested bud. Further, the algorithm unit 34 may additionally or alternatively be configured to determine one or more image regions in the formed image and/or to determine one or more virtual regions in the virtual three-dimensional image, which one or more image regions and/or one or more virtual regions respectively represent one or more parts of the bud. Result of this is a segmentation 40 of the bud. In this segmenation, preferably, similar parts of the bud sit together in the same image region and/or virtual region. To illustrate, an entire leaf is preferably identified in the image / virtual three-dimensional image and put in one image region / virtual region.

The three-dimensional image 38 and/or the bud segmentation 40 is and/or are input to a task recommender system 42 that comprises a module 44 for determining a recommendation for a trimming action, in particular for determining a part of the bud that is to be trimmed off. The module 44 may thus determine an instruction 46 for a user to perform a trimming action, in particular to trim off a certain part of the bud. Preferably, module 44 also outputs a signal 48 indicating which overlay image should be presented on the user interface for appropriately conveying the instruction 46 to a human user.

The instruction 46 and signal 48 are then input to the augmentation system 50. This system 50 comprises a light unit 52, an image processing unit 54 and an augmentation module 56. The light unit may be understood to illuminate the bud so that it is clearly visible for the user. Further, the augmentation system receives images, e.g. from a camera mounted on the head-mounted display. Such images are processed by the image processing module 54. Then, the augmentation module 56 can determine, based on the processed image received from the image processing module 54 and on the instruction and, optionally, based on the signal 48, determine an overlay for presenting the instruction to a user on the user interface 58. In particular, module 56 may be configured to determine a position on the user interface, in particular on a display of the user interface, where on the user interface, e.g. where on the display, the instruction to the user should be presented.

The following paragraph describes a detailed example of the method according to an embodiment.

The operation of the system will start with the employee at the workstation. Then, the system will focus illumination light on the bud that is under trimming operation and generate a virtual three-dimensional image of the bud before the trimming has started. The system will then guide the worker through the visual guidance to rotate the bud and simultaneously focus polarized and non-polarized light to capture images and light reflection response indicative of THC content in a photometric sensor of the imaging system. The image processing system will then determine a course of action described below to determine which parts of the plants require trimming, pruning and which parts needs to be kept in the bud. The image processing system will also determine the order of the trimming such as a first portion of the larger fan leaves at the bottom of the bud can be pruned first and then the smaller intertwined sugar leaves in the cola. Subsequently the remaining fan leaves are pruned. The first part will generate a light recipe (a combination of polarized and non-polarized lights) to determine optimal task lighting and the optimal arrangement for the image capturing so that visual guidance and task conformance can perform to the maximum efficiency. This takes the location of the person, the body posture and the hand location with respect to the location of the lights into account. The system will determine the optimal rotation direction of the bud while trimming; in addition, secondary decisions such as the desired final outcome regarding the size of the final bud, removal of parts with mold can be tuned according to end-user preferences. The system will also help trimmer understand the final value of the cola being trimmed to easily determine the total prunes required. It will also provide in real time positive feedback about a job well done.

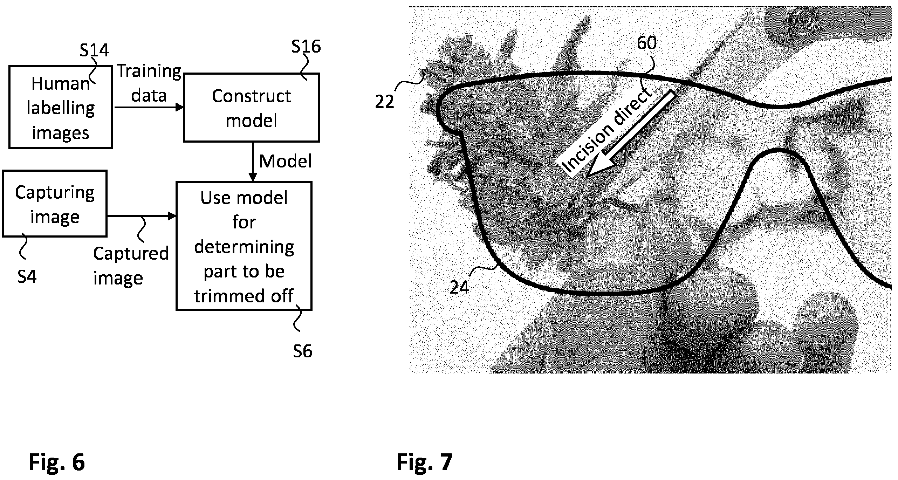

Figure 6 schematically illustrates how machine learning techniques may be utilized. In step S14, one or more human experts label regions in images and/or label virtual region in virtual three-dimensional images that are to be trimmed off. The images and/or models in association with their regions indicated by the human expert constitute training data which may be used for machine learning to construct a model, which is illustrated in step S16. The training data thus comprise a plurality of images of respective reference buds and the training data indicate for each image which part of the imaged bud should be trimmed off. The constructed model can then be used in step S6, also described with reference to figure 1, by the image processing system to determine the part of the bud that is to be trimmed off.

Any suitable machine learning technique may be used for constructing the model.

The algorithm used for constructing the model can be any popular Convolutional Neural Network that has encoder-decoder kind of architecture and is able to use images as input and generate segmented image as an output.

An example can be a UNET architecture (see {Ronneberger, Olaf, Philipp Fischer and Thomas Brox. "U-Net: Convolutional Networks for Biomedical Image Segmentation." MICCAI (2015); doi: 10.1007/978-3-319-24574-4_28}) which is widely popular in medical image segmentation with attention mechanism attached to it, for example described in {Khanh et al; Enhancing U-Net with Spatial-Channel Attention Gate for Abnormal Tissue Segmentation in Medical Imaging; Appl. Sci. 2020, 10, 5729; doi:10.3390/app10175729}). The attention may be provided in spatial map kind of form to make sure the context of each part of the image is rightly applied to the algorithm when it is processing the image. The spatial map can be generated using the reflectance and desirability score of the part of the bud.

Figure 7 schematically illustrates how a user may receive the instruction to trim off a certain part of the bud. In figure 7, the user interface is a head mounted display 24 which comprises a semi-transparent display. The bud 22 is namely visible through the display. This obviates the need to render an image of the bud on the display. What is rendered is the instruction 60 to trim off a certain part of the bud. In figure 7, this is embodied as an arrow pointing to the part of the bud that is to be trimmed off together with a label comprising the instruction "Incision direct". Of course, the instruction 60 should be rendered on the display such that the user perceives the arrow as pointing to the correct part of the bud that is to be trimmed off. Known augmented reality technology may be used for rendering the instruction on the correct position on the display. To this end, the head-mounted display may for example comprise a camera, so that an imaging processing system can accurately determine the viewing angle of the user and, based on this viewing angle, determine the correct position of the instruction 60. This may involve the image processing system mapping the constructed virtual three-dimensional model onto the images as recorded by the camera on the head-mounted display.

The user interface may also present other instructions to the user, for example an instruction to rotate the bud 22 in a specific manner, for example so that other parts of the bud become visible to the imaging system 16.

In an example, the image processing system can determine, for each image region of the one or more image regions and/or for each virtual region of the one or more virtual regions, a score indicating a degree to which the bud's part as represented by image region in question and/or by the virtual region in question is desired in the bud.

In an embodiment, the user interface to deliver trimming instructions l(as well as instructing the person to perform the steps required for the generation of the 3D flower images) is implemented as a handsfree device. This enables the trimmer to use both hands for trimming.

Recent technology advances enable the very high-quality AR glasses suitable for the system described herein. For instance, MicroLED-based AR glasses offer see-through viewing experience when combined with a waveguide optics formed from precision nanostructures in the glass and hence enable high-resolution computer-generated graphics, images and information superimposed over images from the physical or real world. MicroLEDs deliver high efficiency and an improvement in lumen output compared AR alternatives currently available on the market. Monolithic microLED technology is capable to provide high luminance in a very small form factor with minimal energy consumption, reducing costs and enabling lightweight battery-powered products for a range of emerging consumer and industrial applications.

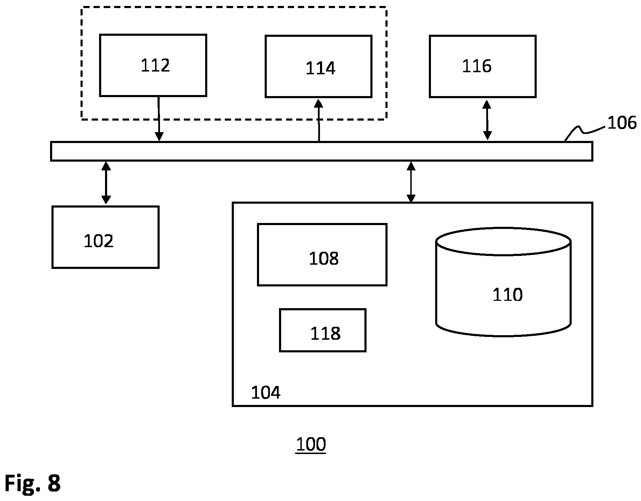

Fig. 8 depicts a block diagram illustrating a data processing system according to an embodiment.

As shown in Fig. 8, the data processing system 100 may include at least one processor 102 coupled to memory elements 104 through a system bus 106. As such, the data processing system may store program code within memory elements 104. Further, the processor 102 may execute the program code accessed from the memory elements 104 via a system bus 106. In one aspect, the data processing system may be implemented as a computer that is suitable for storing and/or executing program code. It should be appreciated, however, that the data processing system 100 may be implemented in the form of any system including a processor and a memory that is capable of performing the functions described within this specification.

The memory elements 104 may include one or more physical memory devices such as, for example, local memory 108 and one or more bulk storage devices 110. The local memory may refer to random access memory or other non-persistent memory device(s) generally used during actual execution of the program code. A bulk storage device may be implemented as a hard drive or other persistent data storage device. The processing system 100 may also include one or more cache memories (not shown) that provide temporary storage of at least some program code in order to reduce the number of times program code must be retrieved from the bulk storage device 110 during execution.

Input/output (I/O) devices depicted as an input device 112 and an output device 114 optionally can be coupled to the data processing system. Examples of input devices may include, but are not limited to, a keyboard, a pointing device such as a mouse, a touch-sensitive display, the imaging system 14 or parts of the imaging system 14, such as polarization filters, cameras, et cetera. Examples of output devices may include, but are not limited to, a monitor or a display, speakers, the light source system 14, or parts of the light source system 14 such as polarization filters or a light source, the user interface 24 et cetera. Input and/or output devices may be coupled to the data processing system either directly or through intervening I/O controllers.

In an embodiment, the input and the output devices may be implemented as a combined input/output device (illustrated in Fig. 8 with a dashed line surrounding the input device 112 and the output device 114). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 116 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 100, and a data transmitter for transmitting data from the data processing system 100 to said systems, devices and/or networks. Modems, cable modems, and Ethernet cards are examples of different types of network adapter that may be used with the data processing system 100.

As pictured in Fig. 8, the memory elements 104 may store an application 118. In various embodiments, the application 118 may be stored in the local memory 108, the one or more bulk storage devices 110, or apart from the local memory and the bulk storage devices. It should be appreciated that the data processing system 100 may further execute an operating system (not shown in Fig. 8) that can facilitate execution of the application 118. The application 118, being implemented in the form of executable program code, can be executed by the data processing system 100, e.g., by the processor 102. Responsive to executing the application, the data processing system 100 may be configured to perform one or more operations or method steps described herein.

In one aspect of the present invention, the data processing system 100 may represent an image processing system as described herein.

In another aspect, the data processing system 100 may represent a client data processing system. In that case, the application 118 may represent a client application that, when executed, configures the data processing system 100 to perform the various functions described herein with reference to a "client". Examples of a client can include, but are not limited to, a personal computer, a portable computer, a mobile phone, or the like.

In yet another aspect, the data processing system 100 may represent a server. For example, the data processing system may represent an (HTTP) server, in which case the application 118, when executed, may configure the data processing system to perform (HTTP) server operations.

Various embodiments may be implemented as a program product for use with a computer system, where the program(s) of the program product define functions of the embodiments (including the method described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 102 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A method for instructing a user (20) for post-harvest trimming a bud (22) of a plant, the method comprising
presenting a side of the harvested bud (22) to an imaging system (16);
illuminating (S2), with a light source system (14), a harvested bud (22) with illumination light (5, 5'), the illumination light (5, 5') causing response light (7, 7') from the harvested bud (22), and
receiving (S4), with an imaging system (16), the response light (7, 7') and forming an image of the harvested bud (22), wherein illuminating the bud (22) comprises illuminating with at least partially polarized illumination light and/or wherein receiving the response light comprises polarization filtering the response light, and
determining (S6), with an image processing system (16), based on the formed image of the harvested bud (22), a part of the harvested bud that is to be trimmed off, and
providing (S8), with a user interface (24), based on the determined part of the bud that is to be trimmed off, an instruction to a user to trim off said part, and
providing, with the user interface (24), an instruction to the user (20) to present a different side of the harvested bud (22) to the imaging system (16).

2. The method according to claim 1, wherein the harvested bud (22) is a harvested bud of a cannabis plant.

3. The method according to claim 1 or 2, wherein the user interface (24) comprises a head-mounted display, and wherein
the step of providing (S8) the instruction to the user (22) to trim off said part comprises displaying the instruction to trim off said part on the head-mounted display.

4. The method according to any of the preceding claims, wherein the step of illuminating (S2) the harvested bud (22) comprises illuminating, with the light source system (14), the harvested bud (22) with first illumination light (5) being polarized light having a first polarization, the first illumination light (5) causing first response light (7) from the harvested bud (22), and illuminating, with the light source system (14), the harvested bud (22) with second illumination light (5') being polarized light having a second polarization that is different from the first polarization, the second illumination light (5') causing second response light (7') from the harvested bud (22), and wherein the step of receiving (S4) the response light comprises
receiving (S4), with the imaging system (16), the first response light (7) for forming a first image of the harvested bud (22) and receiving, with the imaging system (16). the second response light (7') for forming a second image of the harvested bud (22).

5. The method according to any of the preceding claims, wherein the step (S6) of determining the part of the bud that is to be trimmed off is based on a model that is obtained by a machine learning method, the machine learning method comprising building said model based on training data, the training data comprising a plurality of images of respective reference buds and the training data indicating for each image which part of the imaged bud should be trimmed off.

6. The method according to any of the preceding claims, further comprising providing, with the user interface (24), an instruction to the user (20) to present a plurality of sides of the harvested bud (22) to the imaging system (16) so that the imaging system (16) can capture a plurality of images of the harvested bud (22) from the plurality of sides.

7. The method according to any of the preceding claims, wherein the step of receiving (S4) response light and forming an image of the harvested bud (22) comprises receiving, from a plurality of different angles relative to the harvested bud, response light and forming a plurality of respective images of the harvested bud from the response light received from the plurality of respective different angles.

8. The method according to the claim 6 and/or 7, further comprising determining, based on the plurality of images of the harvested bud from the plurality of sides and/or based on the plurality of respective images of the harvested bud from the plurality of respective different angles, a virtual three-dimensional image of the harvested bud.

9. The method according to any of the claims 1 to 5, further comprising the image processing system determining one or more image regions in the formed image, the one or more image regions respectively representing one or more parts of the bud, said one or more parts comprising the to-be-trimmed off part.

10. The method according to claim 8, further comprising the image processing system determining one or more virtual regions in the virtual three-dimensional image, the one or more virtual regions respectively representing one or more parts of the bud, said one or more parts comprising the to-be-trimmed off part.

11. The method according to claim 9 or 10, wherein the one or more image regions and/or one or more virtual regions are determined based on the one or more image regions and/or one or more virtual regions comprising pixels representing trichomes on the bud.

12. The method according to any of claims 9 to 11, comprising the image processing system determining, for each image region of the one or more image regions and/or for each virtual region of the one or more virtual regions, a score indicating a degree to which the bud's part as represented by image region in question and/or by the virtual region in question is desired in the bud.

13. The method according to any of the preceding claims, further comprising said user trimming off said part based on the instruction provided by the user interface.

14. A system (1) for instructing a user (20) during post-harvest trimming a bud (22) of a plant, the system (1) comprising
a light source system (14) for illuminating a harvested bud (22) with illumination light (5, 5'), the illumination light (5, 5') causing response light (7, 7') from the harvested bud (22), and
an imaging system (16) for receiving the response light (7, 7') and forming an image of the harvested bud (22), wherein the light source system (14) is configured to illuminate the harvested bud (22) with at least partially polarized illumination light and/or wherein the imaging system (16) comprises a light polarization filter (8a, 8b) for polarization filtering the response light (7), and
an image processing system (100) for determining, based on the formed image, a part of the harvested bud (22) that is to be trimmed off, and
a user interface (24) for providing an instruction to a user (20) to trim off said part and to present a different side of the harvested bud (22) to the imaging system (16).

15. A computer program comprising instructions to cause the system according to claim 14 to perform the method according to any of claims 1-12.

## Patentansprüche

1. Verfahren zum Anweisen eines Benutzers (20) zum Beschneiden einer Knospe (22) einer Pflanze nach einer Ernte, das Verfahren umfassend
Präsentieren einer Seite der geernteten Knospe (22) einem Bildgebungssystem (16),
Beleuchten (S2), mit einem Lichtquellensystem (14), einer geernteten Knospe (22) mit Beleuchtungslicht (5, 5'), wobei das Beleuchtungslicht (5, 5') Antwortlicht (7, 7') von der geernteten Knospe (22) bewirkt, und
Empfangen (S4), mit einem Bildgebungssystem (16), des Antwortlichts (7, 7') und Erzeugen eines Bilds der geernteten Knospe (22), wobei das Beleuchten der Knospe (22) das Beleuchten mit mindestens teilweise polarisiertem Beleuchtungslicht umfasst, und/oder wobei das Empfangen des Antwortlichts das Polarisationsfiltern des Antwortlichts umfasst, und
Bestimmen (S6), mit einem Bildverarbeitungssystem (16), basierend auf dem erzeugten Bild der geernteten Knospe (22), eines Teils der geernteten Knospe, der abgeschnitten werden soll, und
Bereitstellen (S8), mit einer Benutzerschnittstelle (24), basierend auf dem bestimmten Teil der Knospe, der abgeschnitten werden soll, einer Anweisung an einen Benutzer, den Teil abzuschneiden, und
Bereitstellen, mit der Benutzerschnittstelle (24), einer Anweisung an den Benutzer (20), dem Bildgebungssystem (16) eine unterschiedlichen Seite der geernteten Knospe (22) zu präsentieren.

2. Verfahren nach Anspruch 1, wobei die geerntete Knospe (22) eine geerntete Knospe einer Cannabispflanze ist.

3. Verfahren nach Anspruch 1 oder 2, wobei die Benutzerschnittstelle (24) eine Bildschirmbrille umfasst, und wobei
der Schritt des Bereitstellens (S8) der Anweisung an den Benutzer (22), den Teil abzuschneiden, ein Anzeigen der Anweisung, den Teil abzuschneiden, auf der Bildschirmbrille umfasst.

4. Verfahren nach einem der vorstehenden Ansprüche, wobei der Schritt des Beleuchtens (S2) der geernteten Knospe (22) das Beleuchten, mit dem Lichtquellensystem (14), der geernteten Knospe (22) mit erstem Beleuchtungslicht (5), das polarisiertes Licht ist, das eine erste Polarisation aufweist, wobei das erste Beleuchtungslicht (5) ein erstes Antwortlicht (7) von der geernteten Knospe (22) bewirkt, und das Beleuchten, mit dem Lichtquellensystem (14), der geernteten Knospe (22) mit zweitem Beleuchtungslicht (5') umfasst, das polarisiertes Licht ist, das eine zweite Polarisation, die sich von der ersten Polarisation unterscheidet aufweist, wobei das zweite Beleuchtungslicht (5') zweites Antwortlicht (7') von der geernteten Knospe (22) bewirkt, und wobei der Schritt des Empfangens (S4) des Antwortlichts umfasst
Empfangen (S4), mit dem Bildgebungssystem (16), des ersten Antwortlichts (7) zum Erzeugen eines ersten Bilds der geernteten Knospe (22) und Empfangen, mit dem Bildgebungssystem (16), des zweiten Antwortlichts (7') zum Erzeugen eines zweiten Bilds der geernteten Knospe (22).

5. Verfahren nach einem der vorstehenden Ansprüche, wobei der Schritt (S6) des Bestimmens des Teils der Knospe, der abgeschnitten werden soll, auf einem Modell basiert, das durch ein Verfahren maschinellen Lernens erhalten wird, das Verfahren maschinellen Lernens umfassend ein Erstellen des Modells basierend auf Trainingsdaten, die Trainingsdaten umfassend eine Vielzahl von Bildern jeweiliger Referenzknospen, und wobei die Trainingsdaten für jedes Bild angeben, welcher Teil der abgebildeten Knospe abgeschnitten werden soll.

6. Verfahren nach einem der vorstehenden Ansprüche, ferner umfassend das Bereitstellen, mit der Benutzerschnittstelle (24), einer Anweisung an den Benutzer (20), dem Bildgebungssystem (16) eine Vielzahl von Seiten der geernteten Knospe (22) zu präsentieren, sodass das Bildgebungssystem (16) eine Vielzahl von Bildern der geernteten Knospe (22) von der Vielzahl von Seiten erfassen kann.

7. Verfahren nach einem der vorstehenden Ansprüche, wobei der Schritt des Empfangens (S4) von Antwortlicht und Erzeugens eines Bilds der geernteten Knospe (22) das Empfangen, von einer Vielzahl von unterschiedlichen Winkeln relativ zu der geernteten Knospe, von Antwortlicht und das Erzeugen einer Vielzahl von jeweiligen Bildern der geernteten Knospe von dem Antwortlicht, das von der Vielzahl von jeweiligen unterschiedlichen Winkeln empfangen wird, umfasst.

8. Verfahren nach Anspruch 6 und/oder 7, ferner umfassend das Bestimmen, basierend auf der Vielzahl von Bildern der geernteten Knospe von der Vielzahl von Seiten und/oder basierend auf der Vielzahl von jeweiligen Bildern der geernteten Knospe von der Vielzahl von jeweiligen unterschiedlichen Winkeln, eines virtuellen dreidimensionalen Bilds der geernteten Knospe.

9. Verfahren nach einem der Ansprüche 1 bis 5, ferner umfassend das Bildverarbeitungssystem, das einen oder mehrere Bildbereiche in dem erzeugten Bild bestimmt, wobei der eine oder die mehreren Bildbereiche einen oder mehrere Teile der Knospe jeweils darstellen, der eine oder die mehreren Teile umfassend den Teil, der abgeschnitten werden soll.

10. Verfahren nach Anspruch 8, ferner umfassend das Bildverarbeitungssystem, das einen oder mehrere virtuelle Bereiche in dem virtuellen dreidimensionalen Bild bestimmt, wobei der eine oder die mehreren virtuellen Bereiche einen oder mehrere Teile der Knospe jeweils darstellen, der eine oder die mehreren Teile umfassend den Teil, der abgeschnitten werden soll.

11. Verfahren nach Anspruch 9 oder 10, wobei der eine oder die mehreren Bildbereiche und/oder der eine oder die mehreren virtuellen Bereiche basierend auf dem einen oder den mehreren Bildbereichen und/oder dem einen oder den mehreren virtuellen Bereichen bestimmt werden, umfassend Pixel, die Trichome auf der Knospe darstellen.

12. Verfahren nach einem der Ansprüche 9 bis 11, umfassend das Bildverarbeitungssystem, das für jeden Bildbereich des einen oder der mehreren Bildbereiche und/oder für jeden virtuellen Bereich des einen oder der mehreren virtuellen Bereiche eine Punktzahl, die ein Maß angibt, bestimmt, inwieweit der Knospenteil, wie durch den betreffenden Bildbereich und/oder den betreffenden virtuellen Bereich dargestellt, in der Knospe erwünscht ist.

13. Verfahren nach einem der vorstehenden Ansprüche, ferner umfassend, dass der Benutzer den Teil basierend auf der Anweisung, die durch die Benutzerschnittstelle bereitgestellt wird, abschneidet.

14. System (1) zum Anweisen eines Benutzers (20) während des Beschneidens einer Knospe (22) einer Pflanze nach der Ernte, das System (1) umfassend
ein Lichtquellensystem (14) zum Beleuchten einer geernteten Knospe (22) mit Beleuchtungslicht (5, 5'), wobei das Beleuchtungslicht (5, 5') Antwortlicht (7, 7') von der geernteten Knospe (22) bewirkt, und
ein Bildgebungssystem (16) zum Empfangen des Antwortlichts (7, 7') und Erzeugen eines Bilds der geernteten Knospe (22), wobei das Lichtquellensystem (14) konfiguriert ist, um die geerntete Knospe (22) mit mindestens teilweise polarisiertem Beleuchtungslicht zu beleuchten, und/oder wobei das Bildgebungssystem (16) einen Lichtpolarisationsfilter (8a, 8b) zum Polarisationsfiltern des Antwortlichts (7) umfasst, und
ein Bildverarbeitungssystem (100) zum Bestimmen, basierend auf dem erzeugten Bild, eines Teils der geernteten Knospe (22), der abgeschnitten werden soll, und
eine Benutzerschnittstelle (24) zum Bereitstellen einer Anweisung an einen Benutzer (20), den Teil abzuschneiden und dem Bildgebungssystem (16) eine unterschiedliche Seite der geernteten Knospe (22) zu präsentieren.

15. Computerprogramm, umfassend Anweisungen, um zu bewirken, dass das System nach Anspruch 14 das Verfahren nach einem der Ansprüche 1 bis 12 durchführt.

## Revendications

1. Procédé permettant de donner pour instruction à un utilisateur (20) de tailler après récolte un bourgeon (22) d'une plante, le procédé comprenant
la présentation d'un côté du bourgeon (22) récolté à un système d'imagerie (16) ;
l'illumination (S2), avec un système de source de lumière (14), d'un bourgeon (22) récolté avec de la lumière d'illumination (5, 5'), la lumière d'illumination (5, 5') amenant une lumière de réponse (7, 7') en provenance du bourgeon (22) récolté, et
la réception (S4), avec un système d'imagerie (16), de la lumière de réponse (7, 7') et la formation d'une image du bourgeon (22) récolté, dans lequel l'illumination du bourgeon (22) comprend l'illumination avec de la lumière d'illumination au moins partiellement polarisée et/ou dans lequel la réception de la lumière de réponse comprend un filtrage de polarisation de la lumière de réponse, et
la détermination (S6), avec un système de traitement d'image (16), en fonction de l'image formée du bourgeon (22) récolté, d'une partie du bourgeon récolté qui doit être taillée, et
la fourniture (S8), avec une interface utilisateur (24), en fonction de la partie déterminée du bourgeon qui doit être taillée, d'une instruction à un utilisateur pour tailler ladite partie, et
la fourniture, avec l'interface utilisateur (24), d'une instruction à l'utilisateur (20) pour présenter un côté différent du bourgeon (22) récolté au système d'imagerie (16).

2. Procédé selon la revendication 1, dans lequel le bourgeon (22) récolté est un bourgeon récolté d'un plant de cannabis.

3. Procédé selon la revendication 1 ou 2, dans lequel l'interface utilisateur (24) comprend un visiocasque, et dans lequel
l'étape de fourniture (S8) de l'instruction à l'utilisateur (22) pour tailler ladite partie comprend l'affichage de l'instruction pour tailler ladite partie sur le visiocasque.

4. Procédé selon l'une quelconque des revendications précédentes, dans lequel l'étape d'illumination (S2) du bourgeon (22) récolté comprend l'illumination, avec le système de source de lumière (14), du bourgeon (22) récolté avec de la première lumière d'illumination (5) étant de la lumière polarisée ayant une première polarisation, la première lumière d'illumination (5) amenant une première lumière de réponse (7) en provenance du bourgeon (22) récolté, et l'illumination, avec le système de source de lumière (14), du bourgeon (22) récolté avec de la seconde lumière d'illumination (5') étant de la lumière polarisée ayant une seconde polarisation qui est différente de la première polarisation, la seconde lumière d'illumination (5') amenant une seconde lumière de réponse (7') en provenance du bourgeon (22) récolté, et dans lequel l'étape de réception (S4) de la lumière de réponse comprend
la réception (S4), avec le système d'imagerie (16), de la première lumière de réponse (7) permettant de former une première image du bourgeon (22) récolté et la réception, avec le système d'imagerie (16) de la seconde lumière de réponse (7') permettant de former une seconde image du bourgeon (22) récolté.

5. Procédé selon l'une quelconque des revendications précédentes, dans lequel l'étape (S6) de détermination de la partie du bourgeon qui doit être taillée est en fonction d'un modèle qui est obtenu par un procédé d'apprentissage automatique, le procédé d'apprentissage automatique comprenant la construction dudit modèle en fonction de données d'entraînement, les données d'entraînement comprenant une pluralité d'images de bourgeons de référence respectifs et les données d'entraînement indiquant pour chaque image la partie du bourgeon imagé qui doit être taillée.

6. Procédé selon l'une quelconque des revendications précédentes, comprenant en outre la fourniture, avec l'interface utilisateur (24), d'une instruction à l'utilisateur (20) pour présenter une pluralité de côtés du bourgeon (22) récolté au système d'imagerie (16) de sorte que le système d'imagerie (16) peut capturer une pluralité d'images du bourgeon (22) récolté à partir de la pluralité de côtés.

7. Procédé selon l'une quelconque des revendications précédentes, dans lequel l'étape de réception (S4) de lumière de réponse et de formation d'une image du bourgeon (22) récolté comprend la réception, en provenance d'une pluralité d'angles différents par rapport au bourgeon récolté, de lumière de réponse et la formation d'une pluralité d'images respectives du bourgeon récolté à partir de la lumière de réponse reçue de la pluralité d'angles différents respectifs.

8. Procédé selon la revendication 6 et/ou 7, comprenant en outre la détermination, en fonction de la pluralité d'images du bourgeon récolté à partir de la pluralité de côtés et/ou en fonction de la pluralité d'images respectives du bourgeon récolté à partir de la pluralité d'angles différents respectifs, d'une image tridimensionnelle virtuelle du bourgeon récolté.

9. Procédé selon l'une quelconque des revendications 1 à 5, comprenant en outre le système de traitement d'image déterminant une ou plusieurs régions d'image dans l'image formée, la ou les régions d'image représentant respectivement une ou plusieurs parties du bourgeon, ladite ou lesdites parties comprenant la partie à tailler.

10. Procédé selon la revendication 8, comprenant en outre le système de traitement d'image déterminant une ou plusieurs régions virtuelles dans l'image tridimensionnelle virtuelle, la ou les régions virtuelles représentant respectivement une ou plusieurs parties du bourgeon, ladite ou lesdites parties comprenant la partie à tailler.

11. Procédé selon la revendication 9 ou 10, dans lequel la ou les régions d'image et/ou une ou plusieurs régions virtuelles sont déterminées en fonction de la ou des régions d'image et/ou d'une ou plusieurs régions virtuelles comprenant des pixels représentant des trichomes sur le bourgeon.

12. Procédé selon l'une quelconque des revendications 9 à 11, comprenant le système de traitement d'image déterminant, pour chaque région d'image de la ou des régions d'image et/ou pour chaque région virtuelle de la ou des régions virtuelles, un score indiquant un degré auquel la partie du bourgeon telle que représentée par la région d'image en question et/ou par la région virtuelle en question est souhaitée dans le bourgeon.

13. Procédé selon l'une quelconque des revendications précédentes, comprenant en outre ledit utilisateur taillant ladite partie en fonction de l'instruction fournie par l'interface utilisateur.

14. Système (1) permettant de donner pour instruction à un utilisateur (20) après récolte de tailler un bourgeon (22) d'une plante, le système (1) comprenant
un système de source de lumière (14) permettant d'illuminer un bourgeon (22) récolté avec de la lumière d'illumination (5, 5'), la lumière d'illumination (5, 5') amenant une lumière de réponse (7, 7') en provenance du bourgeon (22) récolté, et
un système d'imagerie (16) permettant de recevoir la lumière de réponse (7, 7') et de former une image du bourgeon (22) récolté, dans lequel le système de source de lumière (14) est configuré pour illuminer le bourgeon (22) récolté avec de la lumière d'illumination au moins partiellement polarisée et/ou dans lequel le système d'imagerie (16) comprend un filtre de polarisation de lumière (8a, 8b) pour un filtrage de polarisation de la lumière de réponse (7), et
un système de traitement d'image (100) permettant de déterminer, en fonction de l'image formée, une partie du bourgeon (22) récolté qui doit être taillée, et
une interface utilisateur (24) permettant de fournir une instruction à un utilisateur (20) pour tailler ladite partie et pour présenter un côté différent du bourgeon (22) récolté au système d'imagerie (16).

15. Programme informatique comprenant des instructions pour amener le système selon la revendication 14 à mettre en œuvre le procédé selon l'une quelconque des revendications 1 à 12.
